# EUROPEAN PATENT SPECIFICATION

(11) **EP 0 472 147 B1**
(45) Date of publication and mention of the grant of the patent: **08.11.1995**
(21) Application number: 91113891.5
(22) Date of filing: 20.08.1991
(51) Int. Cl.: H04N 5/76, G11B 27/10

(54) **Televison program recording and reproducing system**
System zur Aufzeichnung und Wiedergabe eines Fernsehprogrammbeitrages
Système d'enregistrement et de reproduction d'une émission de télévision

(30) Priority: 23.08.1990 JP 223170/90
(43) Date of publication of application: 26.02.1992
(73) Proprietor: MATSUSHITA ELECTRIC INDUSTRIAL CO., LTD., Kadoma-shi, Osaka-fu, 571 (JP)
(72) Inventor: Henmi, Hidemi, Otsu-shi, Shiga-ken (JP)
(74) Representative: Eisenführ, Speiser & Partner

(56) References cited:
- EP-A- 0 337 336
- DE-C- 3 623 108
- GB-A- 2 212 649
- US-A- 4 890 168

## Description

### BACKGROUND OF THE INVENTION

### 1. Field of the Invention

The present invention relates to a television program recording and reproducing system which is arranged to make the contents of recorded programs readily available by displaying the list thereof, and to reproduce a desired program from its beginning by selecting the desired program from the recorded program list.

### 2. Description of the Prior Art

The television programs are recorded in a recording medium, such as a magnetic video tape. When a plurality of programs are recorded in plurality of tapes, it is difficult to know in which tape and where in the tape the wanted program is recorded, unless the tapes are well organized. A television program recording and reproducing system which is capable of easily displaying the contents of recorded programs and easily reproducing a desired recorded program from its beginning has been demanded.

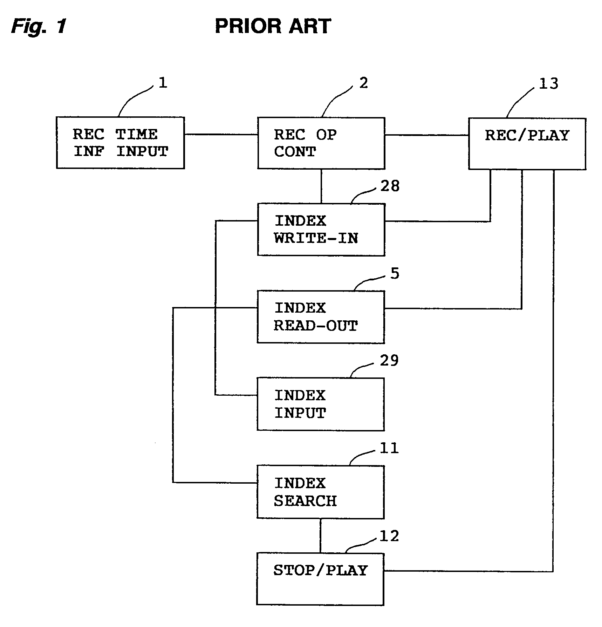

Hereinbelow, an example of the conventional television program recording and reproducing system will be described with reference to Fig. 1.

Fig. 1 is a block diagram showing construction of a conventional television program recording and reproducing system, which includes: a recording time information input means, or a timer, 1 for inputting recording information such as channel, date, recording start time, recording end time, program title to be recorded, etc. for recording television signals; a recording operation control means 2 for starting or ending the recording operation based on the recording time information inputted by the recording time information input means 1; an index write-in means 28 for writing a search index information indicating the recording start position into a recording medium at start of recording; an index read-out means 5 for reading out, at start of reproducing, the index information written in by the index information write-in means 28; an index input means 29 for inputting the index number of the recorded program desired to be reproduced; an index search means 11 for searching the index number inputted by the index input means 29 from the recording medium; a stop/reproduce means 12 for stopping the search and reproducing the program which is found by the index search means 11; and a recording/reproducing section 13 for recording such as television signal on a recording medium and for reproducing the recorded television signal.

With respect to the television program recording and reproducing system constructed as described above, the operation thereof will be described with reference to Fig. 1.

In Fig. 1, when a television program is recorded by the use of timer 1, the recording program information such as channel, date, recording start time, recording end time, etc. are first inputted by the timer 1. The recording operation control means 2 reads the program as stored in timer 1 and operates the recording/reproducing section 13 to record the program when the time comes. The index input means 29 operates at the recording time and reproducing time such that, during the recording, the index number as specified by the index input means 29 is recorded by the index write-in means 28, and during the reproducing, the index number having been written in by the index write-in means 28 is read out by the index read-out means 5 and the index number specified by the index input means 29 is searched by the index search means 11.

When the index number specified by the index input means 29 and the index number detected by the index search means 11 match with each other, the searching stops and the reproducing starts by the stop/reproducing means 12.

A television program recording and reproducing system comprising index input means and index search means is described in US-A-4 890 168.

However, the prior art system as described above has the following problems. By the above arrangement, it is not possible to record index numbers at the time of setting the timer. Furthermore, since the contents of recorded programs are not readily displayable, it is necessary to reproduce the recorded medium each time to know the contents thereof, or it is necessary to apply a label indicating the recorded contents on the tape (recording medium).

Furthermore, in the case where a plurality of programs are recorded on a single tape, there is such a problem that the searching of the beginning of the desired program takes time and labor.

### SUMMARY OF THE INVENTION

The present invention has been developed in view of the above-described problems, and an essential object of the present invention is to provide a television program recording and reproducing system which is arranged so that, at the time recording a television program set in a timer, program information and index numbers identifying the section in the tape where the program is recorded are automatically recorded on the recording medium, so that the contents of the recorded programs in the recording medium can be known when the recording medium is inserted in a reproducing apparatus.

Another object of the present invention is to provide a television program recording and reproducing system which is capable of simplifying adding of the recording information of the television program.

In order to achieve the aforementioned objective, according to the present invention, a television program recording and reproducing system for recording a television program on a recording medium comprises: recording program information input means for inputting recording information; time detecting means for detecting a time when to start the recording in accordance with said recording information; recording operation control means for controlling the recording of a television program in accordance with said recording information; index detecting means for detecting an index along said recording medium to identify a section in said recording medium where the television program is recorded; initial position returning means for returning said recording medium to an initial position; information writing means and automatic index write-in means for writing the recording information of the recorded program together with said index at the initial position of the recording medium.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a block diagram of a prior art television program recording and reproducing system;
Fig. 2 is a block diagram of a television program recording and reproducing system according to a first preferred embodiment of the present invention;
Fig. 3 is a diagram showing an example of a display on a screen of a list of recorded programs;
Fig. 4 is a block diagram of a television program recording and reproducing system according to a second preferred embodiment of the present invention; and
Fig. 5 is a diagram showing an example of a display on a screen of a television program.

### DETAILED DESCRIPTION OF THE PREFERRED EMBODIMENTS

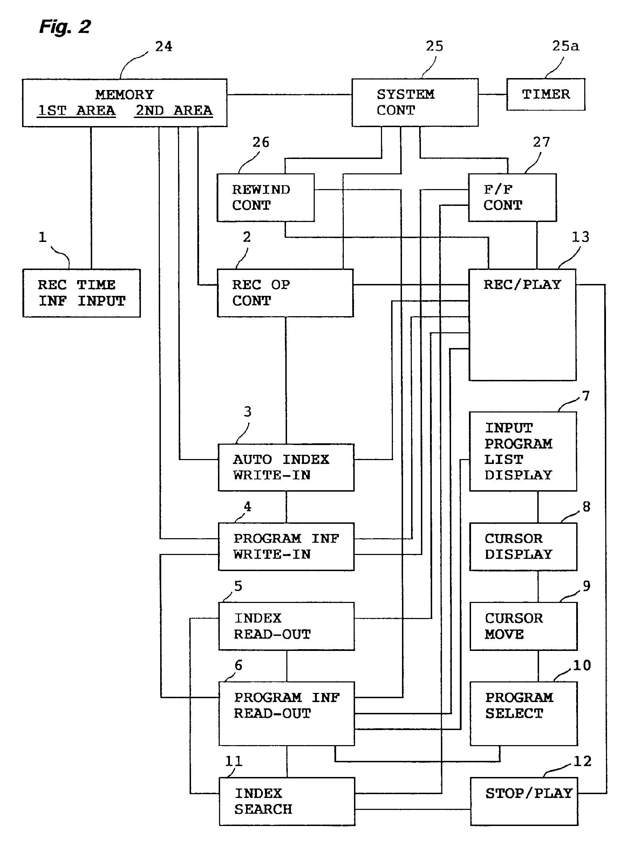

Referring to Fig. 2, a television program recording and reproducing system according to a first preferred embodiment of the present invention is shown.

The television program recording and reproducing system of the first embodiment includes: a recording time information input means 1, formed by a keyboard or a bar code reader, for inputting the recording time information such as, a channel number, date, recording start time, recording end time, title of the program to be recorded, etc. of the television signal or the like; a recording operation control means 2 for starting or ending the recording operation based on the recording time information inputted by the recording time information input means 1; an automatic index write-in means 3 for automatically writing an index information indicating the recording start position on a recording medium, such as on a magnetic tape; a program information write-in means 4 for writing, when inputting the recording time information, the program information corresponding to the index information on the recording medium; an index read-out means 5 for reading out, at the time of reproducing, the index information written by the automatic index write-in means 3; a program information read-out means 6 for reading out, at the time of reproducing, the one or more pieces of recording time information such as, a channel number, date, recording start time, recording end time, title of the program to be recorded, etc. as inputted by said recording time information input means 1; an input program list display means 7 for displaying a list, at the time of reproducing, of the recorded program information as read out by the program information read-out means 6; a cursor display means 8 for displaying a cursor for pointing one of a plurality of programs in the program list displayed by the program list display means 7; a cursor moving means 9 for moving the cursor displayed by the cursor display means 8 to change the pointing of the listed programs; a program selection means 10 for selecting the program pointed by the cursor moving means 9; an index search means 11 for searching the index corresponding to the program selected by the program selection means 10 through the tape; a stop/reproduce means 12 for stopping the search and reproducing the program which is found by the index search means 11; and a recording/reproducing section 13 provided in the video cassette recorder (VCR) for recording the television signal, or the like, on the recording medium and also for reproducing the recorded television signal from the recording medium.

The television program recording and reproducing system of the first embodiment further includes: a memory 24 having a first and second memory areas for storing the recording time information such as, the channel number, date, recording start time, recording end time, title of the program to be recorded, etc as inputted by the input means 1 in the first memory area and for storing similar data, but after the actual recording is started, in the second memory area; a rewind control 26 for controlling the rewinding mechanism (not show) provided in the VCR; a fast forward control 27 for controlling the fast forward mechanism (not shown) in the VCR; and a system control 25 coupled with a timer 25a for controlling the rewind control 26, fast forward control 27 and recording operation control 2 to determined where and when the recording time information should be recorded.

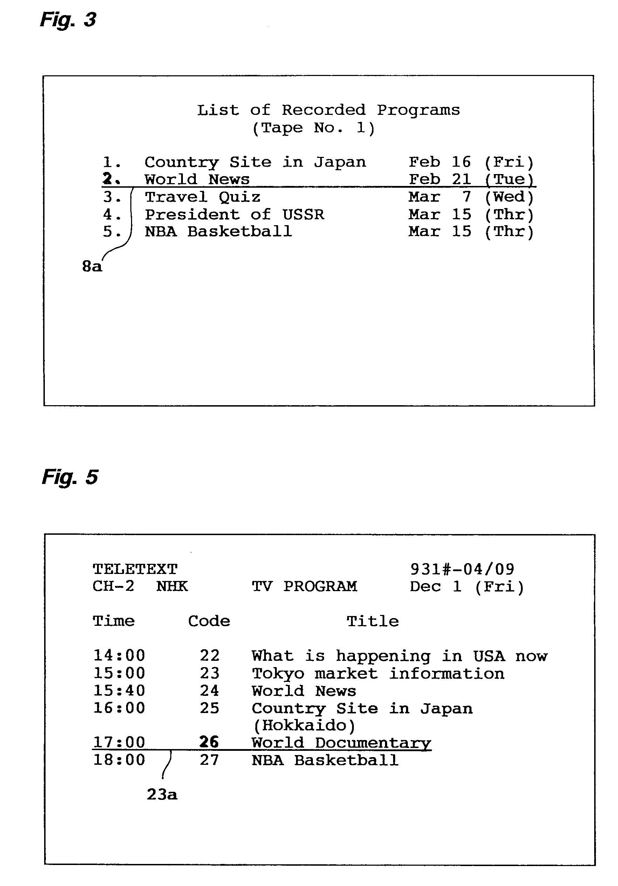

The operation of the above described television program recording and reproducing system is given below with reference to Figs. 2 and 3.

First, in the case of recording a number of programs using the timer 1, the recording time information input means 1 is operated to input various data, such as a channel number, date, recording start time, recording end time, and the title of program to be recorded. This operation is carried out for a plurality of times to store a plurality of future programs in the first area in memory 24. It is assumed that the recording is to be carried out from the beginning of the tape. Then, when a cassette is inserted in the VCR, the system control 25 activates the rewind control 26 to rewind the cassette tape to initial position at which the tape is completely wound on the supply reel, and at the same time, the index is reset to zero. A predetermined tape area at the beginning of the tape, particularly in the voice recording track, is preserved for storing the list of the recorded programs. Then, when the first recording start time as stored in the first area in memory 24 comes, the recording operation control means 2 operates the recording/reproducing section 13 to record the first inputted program. In this case, the index information indicating the recording start position in the tape is also written by the automatic index write-in means 3 in the second memory area in memory 24. Once the first program recording starts, the recording time information including the channel number, date, recording start time, recording end time, and the program title as stored in the first area in memory 24 is shifted to, or marked as, the second memory area in memory 24. This shifting may be done at the beginning, ending, or mid of the recording of the first program. Then, when the recording of the first program ends, the auto index write-in means 3 writes in the second memory area in memory 24 the index information indicating the recording end position of the first program in the tape. Then, immediately thereafter, the system control 25 activates the rewind control 26 to rewind the tape to the initial position, and then, the program information write-in means 4 controls the recording/reproducing section 13 to write the data stored in the second area in memory 24 in the predetermined tape area at the beginning of the tape. Immediately thereafter, the system control 25 activates the fast forward control 27 to advance the tape to the end of the first recorded program in accordance with the index information stored in the second area in memory 24.

Thereafter, when the second recording start time as stored in the first area in memory 24 comes, the above operation is repeated so as to record the second program in the tape after the first program, and to add the second recorded program information in the list at the beginning of the tape, and to advance the tape to the end of the second recorded program, making it ready for storing the third program.

In the case where two subsequent programs to be recorded is very close to each other in term of time, the adding of the recorded program information in the list may be carried out after the two subsequent programs are recorded. In this case, the system control 25 controls the system such that the program information to be added to the list for the two subsequent programs are maintained in the second area in memory 24 until the recording of the two subsequent programs are completed.

Alternatively, the recording of the program information in the list at the beginning of the tape can be carried out after the recording of the last program stored in the first area in memory 24 is completed. In this case, the program information to be added to the list for all the programs are maintained in the second area in memory 24.

Furthermore, alternatively, the recording of the program information at the beginning of the tape can be carried out when a tape eject button (not shown) is depressed. In this case, before ejecting the cassette tape, the system control 25 activates the rewind control 26 so that the tape is rewinded to the initial position for recording the program information in the list.

Next, in the case of reproducing, or playing, the recorded program, the system control 25 activates the rewind control 26 so that a cassette tape inserted in the recording/reproducing section 13 is rewind to the initial position. Then, the list of the program information written at the beginning of the tape by the program information write-in means 4 is read out by the program information read-out means 6 upon control of the recording/reproducing section 13. The list of the program information as read out by the program information read-out means 6 is displayed on the screen by the list display means 7. An example of such a display on the screen is shown in Fig. 3. A program in the list on the screen can be selected by a cursor 8a, which is formed by cursor display means 8 and can be shifted by cursor moving means 9. When the cursor 8a is shifted to a desired program in the list, the program selection means 10 is operated to select the program pointed by the cursor 8a. The program selection is carried out in such a manner that the program information selected by the program selection means 10 is marked in the list stored in the program information read-out means 6, and the index information representing the start position of the selected program is applied to the index searching means 11 as a target index. Then, the fast forward control 27 is operated to advance the tape at fast speed. In the index searching means 11, the target index as obtained from the program information read-out means 6 is compared with the index as read out by the index read-out means 5 during the fast advance of the tape. When the index from the index read-out means 6 matches with the target index, the stop/reproducing means 12 is operated to stop the searching operation and to start the reproducing operation by the recording/reproducing section 13.

It is to be noted that the program information write-in means 4 is provided with a modulator for modulating the program information data obtained from memory 24 from digital form to analog form digital data which is capable of being recorded in the audio track in the tape. Similarly, the program information read-out means 6 is provided with a demodulator for demodulating the program information data obtained from the tape from analog form digital data to digital form capable of being processed for the display on the screen.

As described above, according to the first preferred embodiment, since the recorded program information is stored at the beginning of the tape, it is possible to display the list of the recorded program information when the tape is inserted in the VCR. Thus, it is possible to easily know the contents of the tape and, also to easily access the desired program recorded in the tape.

A television program recording and reproducing system according to a second preferred embodiment of the present invention will now be described. When compared with the first embodiment, the second embodiment has an improved recording time information input means 1, the remaining parts are the same as those shown in Fig. 2.

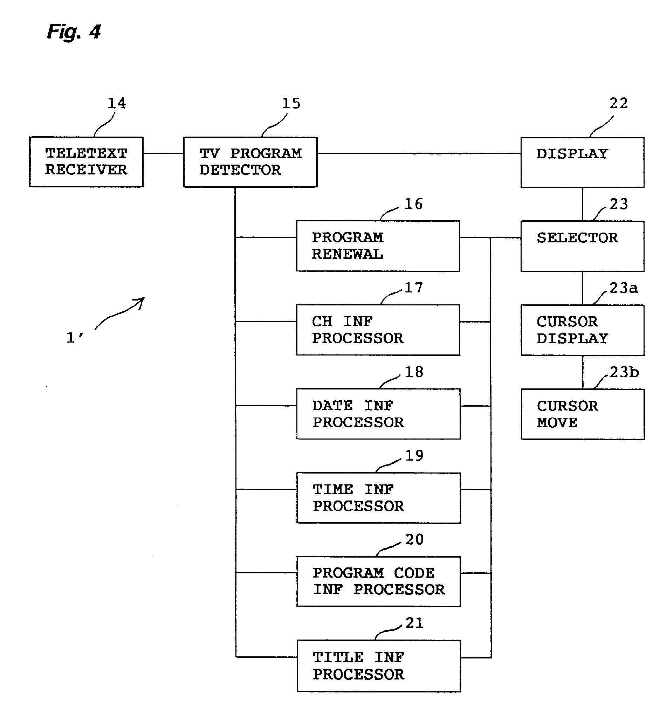

Referring to Fig. 4, an improved recording time information input means 1′ according to the second embodiment includes a TELETEXT receiver 14 for receiving the character broadcasting of coded transmission system. In the receiver 14, the character information superimposed in the vertical return blanking period in the television signal is extracted, and the extracted character signal is decoded so as to develop into character figures for the display. The input means 1′ further has: a television program detector 15 for detecting the television program information from the receiver 14; a program renewal processing means 16 for updating the program information from the data of the data unit detected by the program detector 15; a channel information processing means 17 for processing the channel information from the data unit data detected by the program recognition means 15; a date information processing means 18 for processing the date information from the data unit data detected by the program detector 15; a time information processing means 19 for processing the time information from the data unit data detected by the program detector 15; a program code information processing means 20 for processing the program code information from the data unit data detected by the program detector 15; a title information processing means 21 for processing the title information from the data unit data detected by the program detector 15; a display means 22 for displaying the data processed by the program detector 15 on the screen; and a selector 23 coupled with a cursor display means 23a and a cursor moving means 23b for selecting the program from the television program list on the screen as displayed by the display means 22.

The operation of the television program recording and reproducing system as described above will be given below with reference to Figs. 4 and 5.

First, the receiving means 14 extracts character signals from the received television signal. From the extracted character signals, the program detector 15 detects the television program list data unit carrying the program information of the television broadcasting. The detected television program list data unit is applied to the display means 22 for displaying the television program such as in a manner shown in Fig. 5. The selector 23 coupled with the cursor display means 23a and cursor moving means 23b selects a desired program on the screen by pointing a program using the cursor 23a. The selected program is marked in the program detector 15 so that, with respect to the marked program, the channel information processing means 17 reads the channel information; the date information processing means 18 reads month and day information; the time information processing means 19 reads the start time (hour and minute) information, and end time (hour and minute) information; the program code information processing means 20 reads the program code information; and the program title information processing means 21 reads the program title information. The read program information are stored in the first area in memory 24 (Fig. 2). The above operation is repeated to store a plurality of programs for recording.

In the case where the program time schedule changes, such as when a boxing relay broadcasting is extended to defer the programs following thereafter, the broadcasting station sends renewed time information of the programs through the TELETEXT. Before starting the recording of each program, the system control 25 checks if the starting time of the stored program is the same as the starting time information of the same program now being broadcasted through the TELETEXT by matching the code number. If the starting time is changed, the program renewal processing means 16 reads the renewed information and replaces the old information with the new information. Thus, the recording of the program can be carried out from the beginning to the end even when the starting time of the program is changed.

As described above, according to the second embodiment of the present invention, by detecting the program information from the TELETEXT information, it is possible to easily store and write the program information at the beginning of the tape.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A television program recording and reproducing system for recording a television program on a recording medium, comprising:
recording program information input means (1, 24) for inputting recording information;
time detecting means (25, 25a) for detecting a time when to start the recording in accordance with said recording information;
recording operation control means (2, 13) for controlling the recording of a television program in accordance with said recording information;
index detecting means (5) for detecting an index along said recording medium to identify a section in said recording medium where the television program is recorded;
initial position returning means (26) for returning said recording medium to an initial position;
information writing means (4, 13) and automatic index write-in means (3, 13) for writing the recording information of the recorded program together with said index at the initial position of the recording medium.

2. A television program recording and reproducing system as claimed in Claim 1, further comprising advancing means (5, 27) for advancing said recording medium to the end of said section identified by said index.

3. A television program recording and reproducing system as claimed in Claim 1, wherein said recording program information input means (1, 24) has a memory (24) for storing information of a plurality of television programs.

4. A television program recording and reproducing system as claimed in Claim 3, wherein said information writing means (4, 13) writes the recording information of a plurality of recorded programs in a list.

5. A television program recording and reproducing system as claimed in Claim 1, further comprising:
reading means (6) for reading the recording information written at said initial position of the recording medium;
display means (7) for displaying the read recording information;
selecting means (8, 9, 10) for selecting recording information of one recorded program; and
access control means (11, 12, 27) for controlling the access to said section in said recording medium as identified by said index.

6. A television program recording and reproducing system as claimed in Claim 1, wherein said recording program information input means (1, 24) comprises:
data extraction means (14) for extracting character broadcasting signals of coded transmission system superimposed during the vertical line blanking period of the television signal;
television program detecting means (15) for detecting television program information in said character broadcasting signals;
program display means (22) for displaying the television program;
selecting means (23) for selecting a program; and
processing means (17, 18, 19, 20, 21) for processing said selected program to obtain recording information.

7. A television program recording and reproducing system as claimed in Claim 6, further comprising program renewal means (16) for updating the recording information of the selected program.

## Patentansprüche

1. Fernsehsendungs-Aufzeichnungs- und Wiedergabesystem zum Aufzeichnen einer Fernsehsendung auf einem Aufzeichnungsmedium, mit:
Aufzeichnungssendungsinformationseingabeeinrichtungen (1, 24) zum Eingeben von Aufzeichnungsinformationen;
Zeiterfassungseinrichtungen (25, 25a) zum Erfassen der Anfangszeit der Aufzeichnung in Übereinstimmung mit den Aufzeichnungsinformationen;
Aufzeichnungsablaufsteuerungseinrichtungen (2, 13) zum Steuern des Aufzeichnens einer Fernsehsendung in Übereinstimmung mit den Aufzeichnungsinformationen;
Indexerfassungseinrichtungen (5) zum Erfassen eines Index entlang des Aufzeichnungsmediums zum Identifizieren einer Sektion des Aufzeichnungsmediums, in welcher die Fernsehsendung aufgezeichnet ist;
Anfangspositionsrückführungseinrichtungen (26) zum Zurückführen des Aufzeichnungsmediums an eine Anfangsposition;
Informationsschreibeinrichtungen (4, 13) und automatische Indexeintragungseinrichtungen (3, 13) zum Schreiben der Aufzeichnungsinformation der aufgezeichneten Sendung zusammen mit dem Index an die Anfangsposition des Aufzeichnungsmediums.

2. Fernsehsendungs-Aufzeichnungs- und Wiedergabesystem nach Anspruch 1, welches weiterhin Vorwärtstransporteinrichtungen (5, 27) zum Vorwärtstransportieren des Aufzeichnungsmediums zu dem Ende der durch den Index identifizierten Sektion umfaßt.

3. Fernsehsendungs-Aufzeichnungs- und Wiedergabesystem nach Anspruch 1, in welchem die Aufzeichnungssendungsinformationseingabeeinrichtung (1, 24) einen Speicher (24) zum Speichern der Information einer Mehrzahl von Fernsehsendungen aufweist.

4. Fernsehsendungs-Aufzeichnungs- und Wiedergabesystem nach Anspruch 3, bei welchem die Informationsschreibeinrichtung (4, 1 3) die Aufzeichnungsinformation einer Mehrzahl aufgezeichneter Sendungen in eine Liste schreibt.

5. Fernsehsendungs-Aufzeichnungs- und Wiedergabesystem nach Anspruch 1, mit:
Leseeinrichtungen (6) zum Lesen der an der Anfangsposition des Aufzeichnungsmediums geschriebenen Aufzeichnungsinformation;
Anzeigeeinrichtungen (7) zum Anzeigen der gelesenen Aufzeichnungsinformation;
Selektionseinrichtungen (8, 9, 10) zum Selektieren der Aufzeichnungsinformationen einer aufgezeichneten Sendung; und
Zugriffssteuerungseinrichtungen (11, 12, 27) zum Steuern des Zugriffs auf die durch den Index identifizierte Sektion auf dem Aufzeichnungsmedium.

6. Fernsehsendungs-Aufzeichnungs- und Wiedergabesystem nach Anspruch 1, in welchem die Aufzeichnungssendungsinformationseingabeeinrichtung (1, 24) umfaßt:
Datenextraktionseinrichtungen (14) zum Extrahieren von Zeichenrundfunksignalen eines kodierten Übertragungssystems, welche dem Fernsehsignal während der vertikalen Zeilenaustastperiode überlagert sind;
Fernsehsendungserfassungseinrichtungen (15) zum Erfassen von Fernsehsendungsinformationen in den Zeichenrundfunksignalen;
Sendungsanzeigeeinrichtungen (22) zum Anzeigen der Fernsehsendung;
Selektionseinrichtungen (23) zum Selektieren einer Sendung; und
Verarbeitungseinrichtungen (17, 18, 19, 20, 21) zum Verarbeiten der selektierten Sendung, um Aufzeichnungsinformationen zu erhalten.

7. Fernsehsendungs-Aufzeichnungs- und Wiedergabesystem nach Anspruch 6, welches weiterhin Sendungserneuerungseinrichtungen (16) zum Aktualisieren der Aufzeichnungsinformation der selektierten Sendung umfaßt.

## Revendications

1. Système d'enregistrement et de reproduction d'émission de télévision pour enregistrer une émission de télévision sur un support d'enregistrement, comprenant:
des moyens d'entrée d'informations de programme d'enregistrement (1, 24) pour entrer des informations d'enregistrement;
des moyens de détection de temps (25, 25a) pour détecter une heure à laquelle commencer l'enregistrement conformément auxdites informations d'enregistrement;
des moyens de commande d'opération d'enregistrement (2, 13) pour commander l'enregistrement d'une émission de télévision conformément auxdites informations d'enregistrement;
des moyens de détection d'index (5) pour détecter un index le long dudit support d'enregistrement afin d'identifier dans ledit support d'enregistrement une section où est enregistrée l'émission de télévision;
des moyens de retour à la position initiale (26) pour repasser ledit support d'enregistrement à une position initiale;
des moyens d'écriture d'informations (4, 13) et des moyens d'entrée d'écriture d'index automatiques (3, 13) pour écrire les informations d'enregistrement du programme enregistré avec ledit index à la position initiale du support d'enregistrement.

2. Système d'enregistrement et de reproduction d'émission de télévision selon la revendication 1, comprenant en outre des moyens d'avance (5, 27) pour faire avancer ledit support d'enregistrement jusqu'à la fin de ladite section identifiée par ledit index.

3. Système d'enregistrement et de reproduction d'émission de télévision selon la revendication 1, dans lequel lesdits moyens d'entrée d'informations de programme d'enregistrement (1, 24) ont une mémoire (24) pour emmagasiner des informations relatives à une pluralité d'émissions de télévision.

4. Système d'enregistrement et de reproduction d'émission de télévision selon la revendication 3, dans lequel lesdits moyens d'écriture d'informations (4, 13) écrivent les informations d'enregistrement d'une pluralité de programmes enregistrés dans une liste.

5. Système d'enregistrement et de reproduction d'émission de télévision selon la revendication 1, comprenant en outre:
des moyens de lecture (6) pour lire les informations d'enregistrement écrites à ladite position initiale du support d'enregistrement;
des moyens d'affichage (7) pour afficher les informations d'enregistrement lues;
des moyens de sélection (8, 9, 10) pour sélectionner des informations d'enregistrement d'un programme enregistré; et
des moyens de commande d'accès (11, 12, 27) pour commander l'accès à ladite section dans ledit support d'enregistrement identifiée par ledit index.

6. Système d'enregistrement et de reproduction d'émission de télévision selon la revendication 1, dans lequel lesdits moyens d'entrée d'informations de programme d'enregistrement (1, 24) comprennent:
des moyens d'extraction de données (14) pour extraire des signaux de diffusion de caractère du système de transmission codée superposés durant la période de suppression de ligne verticale du signal de télévision;
des moyens de détection d'émission de télévision (15) pour détecter des informations d'émission de télévision dans lesdits signaux de diffusion de caractère;
des moyens d'affichage de programme (22) pour afficher l'émission de télévision;
des moyens de sélection (23) pour sélectionner un programme; et
des moyens de traitement (17, 18, 19, 20, 21) pour traiter ledit programme sélectionné afin d'obtenir des informations d'enregistrement.

7. Système d'enregistrement et de reproduction d'émission de télévision selon la revendication 6, comprenant en outre des moyens de renouvellement de programme (16) pour mettre à jour les informations d'enregistrement du programme sélectionné.
